(19) Europäisches Patentamt / European Patent Office / Office européen des brevets

(11) **EP 4 160 716 A1**

(12) **EUROPEAN PATENT APPLICATION**
published in accordance with Art. 153(4) EPC

(43) Date of publication:
**05.04.2023 Bulletin 2023/14**

(21) Application number: **21812071.5**

(22) Date of filing: **14.05.2021**

(51) International Patent Classification (IPC):
**H01M 4/13** (2010.01)          **H01M 4/139** (2010.01)
**H01M 10/0585** (2010.01)

(52) Cooperative Patent Classification (CPC):
**H01M 4/13; H01M 4/139; H01M 10/0585;**
Y02E 60/10; Y02P 70/50

(86) International application number:
**PCT/JP2021/018429**

(87) International publication number:
**WO 2021/241280 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2020   JP 2020093977**

(71) Applicant: **Zeon Corporation**
**Tokyo 100-8246 (JP)**

(72) Inventor: **OKADA, Seiji**
**Tokyo 100-8246 (JP)**

(74) Representative: **Maiwald GmbH**
**Elisenhof**
**Elisenstraße 3**
**80335 München (DE)**

(54) **LITHIUM ION SECONDARY BATTERY AND METHOD FOR PRODUCING SAME**

(57)   A lithium-ion secondary battery including a plurality of layered units (U), wherein: the layered unit (U) is a unit including a positive electrode layer, a separator layer and a negative electrode layer, and an adhesive layer (NS) interposed between the negative electrode layer and the separator layer to bond them together, the unit having a plurality of edge portions; and the adhesive layer (NS) has a protruding portion protruding to an outer peripheral side of the negative electrode layer at one or more of the edge portions; and a method for producing the lithium-ion secondary battery.

FIG.1

EP 4 160 716 A1

## Description

Field

The present invention relates to a lithium-ion secondary battery and a production method of the same

Background

A general lithium-ion secondary battery includes a casing, an electrolytic solution filled in the casing, and a layered structure provided in the casing. In general, such a layered structure includes a positive electrode layer and a negative electrode layer, and a separator layer provided therebetween. The separator layer is provided in a manner whereby direct contact between the positive electrode layer and the negative electrode layer in the battery is avoided. Furthermore, in order to improve battery performance, multiple units of the positive electrode layers and the negative electrode layers are usually provided in one battery. The layered structure in such a battery is generally produced by preparing a layered unit with an approximately rectangular shape including a positive electrode layer, a first separator layer, a negative electrode layer, and a second separator layer in this order and stacking more than one of the layered units.

It is known that provision of adhesive layers between respective layers in such a layered unit and between the layered units to bond them together for installing the bonded products inside the battery casing makes it possible to facilitate their production and to prevent displacement between these layers inside the battery (Patent Literatures 1 and 2). By adopting the separator layer and the adhesive layer which have a property of holding the electrolytic solution by permeation, an electrochemical system is formed between the positive electrode layer and the negative electrode layer via the electrolytic solution, which can collectively function as a battery.

It is known that the layered unit is produced by a continuous production method using a long-length negative electrode and separator for improving production efficiency.

A plurality of continuously produced layered units are further processed by a laminating device for further laminating them to form a layered structure. Specifically, formation of the layered structure may be performed by stacking the plurality of layered units in a magazine or tray of the laminating machine and subjecting a stacked product to a treatment such as a heat treatment, a pressure treatment, or a combination thereof.

Citation List

Patent Literature

Patent Literature 1: International Publication No. 2020/054801
Patent Literature 2: International Publication No. 2020/067208

Summary

Technical Problem

When stacking a plurality of layered units, the layered units are required to be positioned without displacement during the stacking. For this purpose, when stacking the layered units, one or two edges of each rectangular layered unit abut on a tray or the like, to thereby effect positioning of the layered unit. In this process, a problem such as bending or breakage of an end portion of the negative electrode layer, the separator layer, or the like that constitute the layered unit may occur. Such a problem may occur particularly frequently when the layered units are continuously produced at a high speed.

Thus, an object of the present invention is to provide a lithium-ion secondary battery that can be efficiently produced without causing the problem, and a production method for efficiently producing a lithium-ion secondary battery without causing the problem.

Solution to Problem

The present inventor has conducted studies to solve the above-mentioned problems. As a result, the inventor has conceived that the above-mentioned problems can be solved by an adhesive layer provided between each layer of a layered unit, the layer having a specific shape on an edge of the layered unit. The present invention is completed.

That is, the present invention is as follows.

(1) A lithium-ion secondary battery comprising a plurality of layered units (U), wherein:

the layered unit (U) is a unit including a positive electrode layer, a separator layer and a negative electrode layer, and an adhesive layer (NS) interposed between the negative electrode layer and the separator layer to bond them together, the unit having a plurality of edge portions; and the adhesive layer (NS) has a protruding portion protruding to an outer peripheral side of the negative electrode layer at one or more of the edge portions.

(2) The lithium-ion secondary battery according to (1), wherein, at the edge portion having the protruding portion,

the negative electrode layer extends further to the outer peripheral side than the positive electrode layer, and

the separator layer has an edge aligned with an edge of the negative electrode layer or extending further to the outer peripheral side than the negative electrode layer.

(3) The lithium-ion secondary battery according to (1) or (2), wherein

the layered unit (U) satisfies the following formula (i) :

$$r/2 < o \leq u \quad \text{Formula (i)}$$

(in the formula, o represents a maximum thickness of the protruding portion,
r represents a thickness of the negative electrode layer, and
u represents a thickness of the layered unit (U)).

(4) The lithium-ion secondary battery according to any one of (1) to (3), wherein the separator layer has an edge aligned with an edge of the negative electrode layer at one or more of the edge portions.
(5) The lithium-ion secondary battery according to any one of (1) to (4), wherein the adhesive layer (NS) includes a resin filler having a core-shell structure.
(6) The lithium-ion secondary battery according to any one of (1) to (5), wherein an areal density of the adhesive layer (NS) in a region (X) protruding further to the outer peripheral side than the positive electrode layer on a bonding surface between the negative electrode layer and the separator layer is greater than an areal density of the adhesive layer (NS) in a region (I) inside the region (X).
(7) The lithium-ion secondary battery according to any one of (1) to (6), further comprising an adhesive layer (PS) interposed between the positive electrode layer and the separator layer to bond them together.
(8) A production method of the lithium-ion secondary battery according to any one of (1) to (7), comprising:

a step (1) of preparing a layered unit (pU) having a plurality of edge portions, including the positive electrode layer, the separator layer and the negative electrode layer, and an adhesive layer (pNS) interposed between the negative electrode layer and the separator layer to bond them together; and
a step (2) of applying pressure to one or more edge portions of the layered unit (pU) to protrude a part of the adhesive layer (pNS) to the outer peripheral side of the negative electrode layer, thereby forming a protruding portion to obtain the layered unit (U).

(9) The production method according to (8), wherein the step (1) includes forming the adhesive layer (pNS) in a dot shape by an inkjet coating method.
(10) The production method according to (8) or (9), wherein at the edge portions of the layered unit (pU) to be pressed, a weight basis of the adhesive layer (pNS) in a region (X) protruding further to the outer peripheral side than the positive electrode layer is greater than a weight basis of the adhesive layer (pNS) in a region (I) inside the region (X).
(11) The production method according to any one of (8) to (10), wherein
the step (1) includes:

a step (1-1) of preparing a long-length layered unit primary sheet including a long-length positive electrode layer, a long-length separator layer and a long-length negative electrode layer, and an adhesive layer (pNS) interposed between the long-length negative electrode layer and the long-length separator layer; and
a step (1-2) of cutting the layered unit primary sheet to obtain the layered unit (pU).

(12) The production method according to any one of (8) to (11), further comprising:

a step (3) of stacking a plurality of the layered units (U) while they are kept in a state of being aligned with reference to the edge portion having the protruding portion to obtain a stacked product; and
a step (4) of bonding the layered units (U) to each other in the stacked product.

Advantageous Effects of Invention

According to the present invention, a lithium-ion secondary battery that can be efficiently produced without causing a problem, and a production method for efficiently producing a lithium-ion secondary battery without causing a problem can be provided.

Brief Description of Drawings

FIG. 1 is a perspective view schematically illustrating an example of a layered unit (U) used in the present invention.
FIG. 2 is an exploded perspective view illustrating the layered unit (U) shown in FIG. 1.
FIG. 3 is a partial longitudinal cross-sectional view illustrating the layered unit (U) shown in FIG. 1.
FIG. 4 is a partial longitudinal cross-sectional view schematically illustrating another example of the layered unit (U) used in the present invention.
FIG. 5 is a partial longitudinal cross-sectional view schematically illustrating yet another example of the layered unit (U) used in the present invention.

FIG. 6 is a partial longitudinal cross-sectional view schematically illustrating yet another example of the layered unit (U) used in the present invention.

FIG. 7 is a side view schematically illustrating an example of a production method of the present invention.

FIG. 8 is a perspective view more specifically illustrating a long-length negative electrode layer 121N in a region surrounded by a dashed line R1 in FIG. 7.

FIG. 9 is a side view more specifically illustrating an operation in a pressing step shown in FIG. 7.

FIG. 10 is a side view specifically illustrating another example of the operation in the pressing step shown in FIG. 7.

Description of Embodiments

Hereinafter, the present invention will be described in detail with reference to embodiments and examples. However, the present invention is not limited to the following embodiments and examples, and may be freely modified for implementation without departing from the scope of claims of the present invention and the scope of their equivalents.

(1. Secondary battery: layered unit (U))

A layered unit (U), which is a constituent element of the lithium-ion secondary battery of the present invention, includes a positive electrode layer, a separator layer and a negative electrode layer, and an adhesive layer (NS) interposed between the negative electrode layer and the separator layer to bond them together. The layered unit has a plurality of edge portions and usually has a rectangular shape or a shape that is similar thereto. More specifically, the layered unit may have a shape of a rectangular structure which is further provided with an incidental structure such as an electrode terminal if necessary. Usually, since the layered unit (U) has the rectangular structure, it has four edge portions.

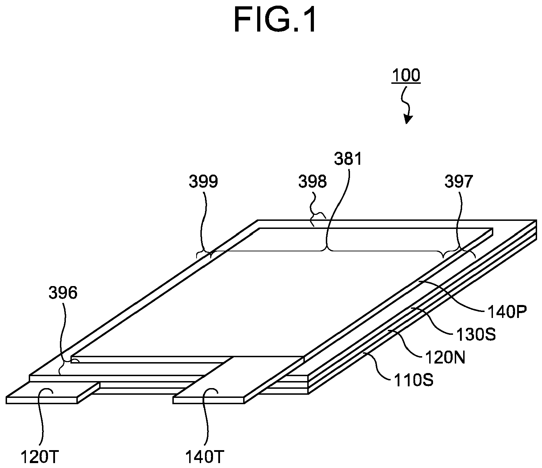

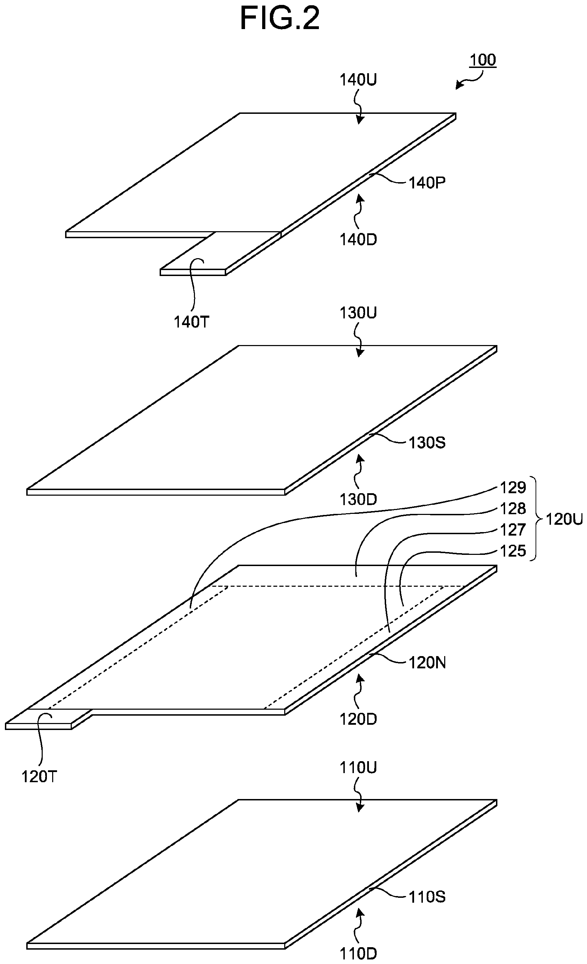

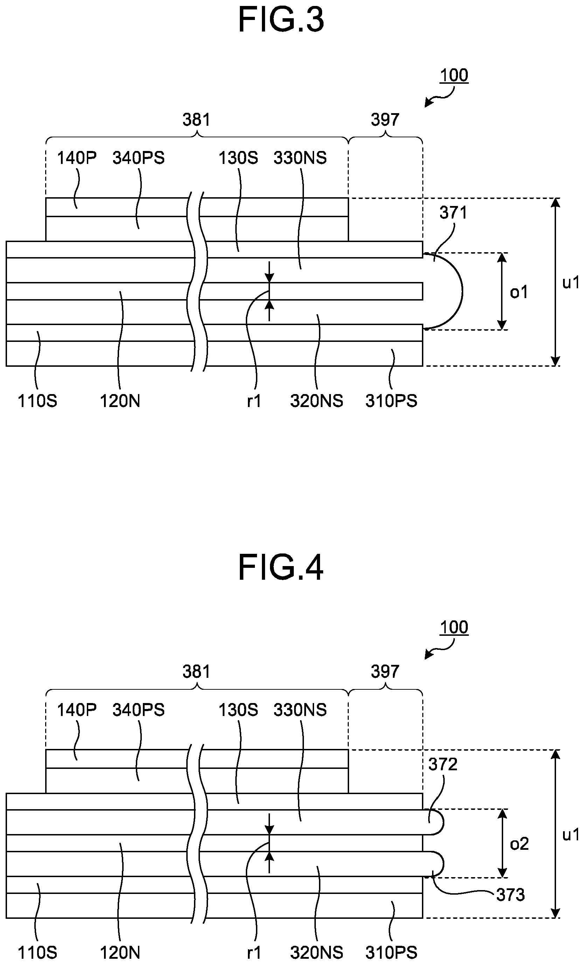

FIG. 1 is a perspective view schematically illustrating an example of the layered unit (U) used in the present invention. FIG. 2 is an exploded perspective view illustrating the layered unit (U) shown in FIG. 1. FIG. 3 is a partial longitudinal cross-sectional view illustrating the layered unit (U) shown in FIG. 1. In FIG. 1 and FIG. 2, for convenience of illustration, the adhesive layer is omitted, and only the positional relationship of the electrode layers and the separator layer is shown.

In FIG. 1 to FIG. 3, a layered unit (U) 100 includes, as constituent elements of its layered structure, one negative electrode layer 120N and one positive electrode layer 140P, and separator layers 110S and 130S. In FIG. 1 and FIG. 2 and subsequent drawings, unless otherwise specified, the layered unit (U) 100 is described in a state of being horizontally placed such that the negative electrode layer is on the lower side and the positive electrode layer is on the upper side. Thus, in the thickness direction within the layered unit (U) 100, a negative-electrode side may be relatively referred to simply as a "lower side", and a positive-electrode side may be relatively referred to as an "upper side". The separator layer 130S is interposed between the negative electrode layer 120N and the positive electrode layer 140P, and the separator layer 110S is positioned on the lower side of the negative electrode layer 120N. The layered unit (U) 100 further includes a negative electrode terminal 120T for electrical conduction between the negative electrode layer 120N and an outside of the secondary battery, and a positive electrode terminal 140T for electrical conduction between the positive electrode layer 140P and an outside of the secondary battery.

As shown in FIG. 3, the layered unit (U) 100 includes an adhesive layer 320NS as the adhesive layer (NS) interposed between the negative electrode layer 120N and the separator layer 110S to bond them together and an adhesive layer 330NS as the adhesive layer (NS) interposed between the negative electrode layer 120N and the separator layer 130S to bond them together. The adhesive layer 320NS is provided in contact with an upper surface 110U of the separator layer 110S and a lower surface 120D of the negative electrode layer 120N to bond them together. The adhesive layer 330NS is provided in contact with an upper surface 120U of the negative electrode layer 120N and a lower surface 130D of the separator layer 130S to bond them together. In addition, the layered unit (U) 100 includes an adhesive layer 340PS as an adhesive layer (PS) interposed between the positive electrode layer 140P and the separator layer 130S to bond them together and an adhesive layer 310PS as the adhesive layer (PS) located on the lower side of the separator layer 110S. The adhesive layer 340PS is provided in contact with an upper surface 130U of the separator layer 130S and a lower surface 140D of the positive electrode layer 140P to bond them together. The adhesive layer 310PS is provided in contact with a lower surface 110D of the separator layer 110S. The adhesive layer 310PS is provided as a layer for achieving bonding with an upper surface 140U of the positive electrode layer 140P of another layered unit (U) located immediately below when a plurality of layered units (U) are stacked.

In the layered unit (U), it is preferable that the negative electrode layer extends further to the outer peripheral side than the positive electrode layer, thereby providing a region (X) where the negative electrode layer protrudes further to the outer peripheral side than the positive electrode layer at one or more edge portions of the layered unit (U). It is also preferable that, at the one or more edge portions of the layered unit (U), the edges of the separator layer are aligned with the edges of the negative electrode layer or extend further to the outer peripheral side than the negative electrode layer. In the layered unit (U) and a structured product containing the layered unit (U), a structure being "aligned" with another structure refers to the state wherein planar positions thereof are aligned. More specifically, a relationship of being "aligned" refers to a positional relationship in which their positions coincide with each other when observed from the normal direction of the main surface of the layered unit (U). It is more preferable that the edges of the negative electrode layer, the positive electrode layer, and the separator layer have such a relationship at all edge portions of the layered unit (U). In the examples in FIG. 1 to FIG. 3, in the layered unit (U) 100, the negative electrode layer 120N extends further to the outer peripheral side than the positive electrode layer 140P, thereby providing the regions (X) 396, 397, 398, and 399 as the region (X) where the negative electrode layer protrudes further to the outer peripheral side than the positive electrode layer at the four edge portions of the layered unit (U). Furthermore, at the four edge portions of the layered unit (U), the four edges of the separator layer 110S and the four edges of the separator layer 130S are all aligned with the four edges of the negative electrode layer 120N.

By having such a relationship between the edges of the negative electrode layer, the positive electrode layer, and the separator layer, it becomes possible to prevent, in the secondary battery constituted by the plurality of layered units (U), a short circuit between the positive electrode layer and the negative electrode layer and, as a result, to improve the performance of the secondary battery. Comparing an embodiment in which the edges of the separator layer and the edges of the negative electrode layer are aligned with each other and an embodiment in which the separator layer extends further to the outer peripheral side than the negative electrode layer, the former is more preferable from the viewpoint of preventing a short circuit, while the latter is more preferable from the viewpoint of production efficiency. Overall, it is particularly preferable to adopt an embodiment in which the negative electrode layer extends further to the outer peripheral side than the positive electrode layer and the edges of the separator layer are aligned with the edges of the negative electrode layer because this embodiment can both prevent a short circuit at a sufficient level and achieve production efficiency.

The adhesive layer (NS) has a protruding portion protruding to the outer peripheral side of the negative electrode layer at one or more of the plurality of edge portions of the layered unit (U). When the layered unit (U) has such a protruding portion, in performing a step of bonding the plurality of layered units (U) to each other, a problem such as bending or breakage of the end portion of the negative electrode layer, the separator layer, or the like constituting the layered unit (U) can be effectively reduced, thereby making it possible to perform this step more efficiently. As a result, the secondary battery can be more efficiently produced.

In the example in FIG. 3, the layered unit (U) 100 has a protruding portion 371 on the side of the region (X) 397. In FIG. 3 and FIG. 4 to FIG. 6 relating to FIG. 3, for simplicity of illustration, only the protruding portion of the edge portion on the side of the region (X) 397 among the four edge portions of the layered unit (U) is illustrated. However, the layered unit (U) is not limited to this configuration and may have the protruding portions at other edge portions as well.

The protruding portion 371 is configured by having a shape in which a material constituting the adhesive layer 320NS and a material constituting the adhesive layer 330NS extend further to the outer peripheral side than the edges of the negative electrode layer and the separator layer and are connected to each other. Specifically, the protruding portion 371 may be formed by extrusion of the adhesive layer by pressing. The specific method will be described below.

In the secondary battery of the present invention, the protruding portion of the layered unit (U) preferably satisfies the following formula (i).

$$r/2 < o \leq u \quad \text{Formula (i)}$$

In the formula (i), o represents the maximum thickness of the protruding portion, r represents the thickness of the negative electrode layer, and u represents the thickness of the layered unit (U). When the value of o exceeds the above-mentioned lower limit, in performing the step of bonding the plurality of layered units (U) to each other, a problem such as bending or breakage of the end portion of the negative electrode layer, the separator layer, or the like constituting the layered unit (U) can be effectively reduced, thereby making it possible to perform this step more efficiently. When the value of o is equal to or less than the above-mentioned upper limit, the occurrence of peeling between the plurality of layered units (U) in the secondary battery is reduced, thereby making it possible to improve durability of the secondary battery.

In the example in FIG. 3, o in the formula (i) is defined by the thickness of the protruding portion 371 shown by an arrow o1, r in the formula (i) is defined by the thickness of the negative electrode layer 120N shown by an arrow r1, and u in the formula (i) is defined by the thickness of the entire layered unit (U) 100 shown by an arrow u1. When the protruding portion is formed by pressing the adhesive layer, it may be formed in various shapes depending on pressing conditions and the like. Examples thereof are shown in FIG. 4 to FIG. 6.

In FIG. 4, protruding portions 372 and 373 are configured by extending the material constituting the adhesive layer 320NS and the material constituting the adhesive layer 330NS, respectively, further to the outer peripheral side than the edges of the negative electrode layer and the separator layer. Unlike the protruding portion 371 in FIG. 3, the protruding portions 372 and 373 constitute separate protruding portions without being connected to each other. When a plurality of separate protruding portions are formed around the negative electrode in such a manner, as shown by an arrow o2 shown in FIG. 4, the maximum value in the thickness range including the plurality of protruding portions is adopted as the maximum thickness o of the protruding portion in the formula (i).

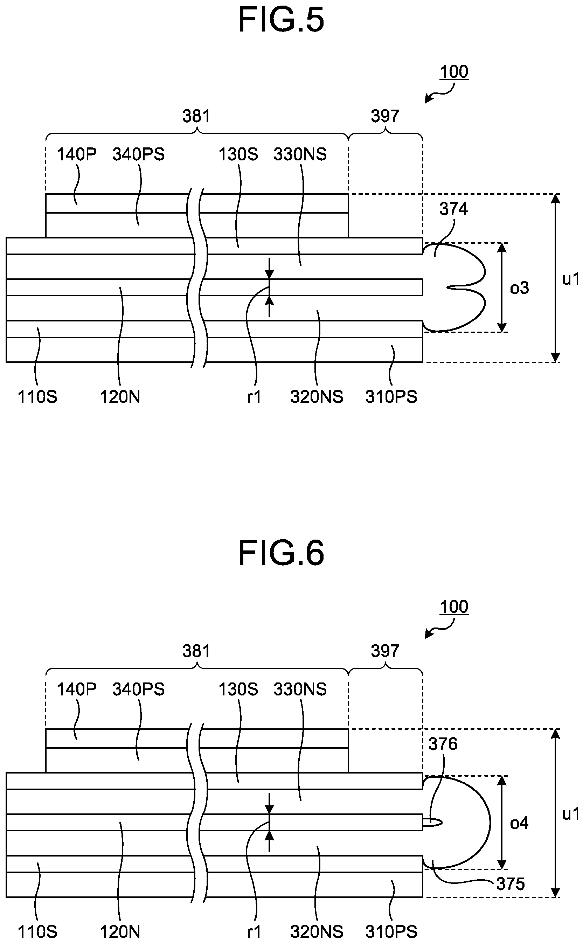

In FIG. 5, a protruding portion 374 is configured by having a shape in which the material constituting the adhesive layer 320NS and the material constituting the adhesive layer 330NS extend further to the outer peripheral side than the edges of the negative electrode layer and the separator layer and are connected to each other. Unlike the protruding portion 371 in FIG. 3, the protruding portion 374 are connected to each other while having a plurality of protrusions. Also in such a case wherein a plurality of protrusions are formed, as shown by an arrow o3 shown in FIG. 5, the maximum value in the thickness range including the plurality of protrusions is adopted as the maximum thickness o of the protruding portion in the formula (i).

In FIG. 6, a protruding portion 375 is configured by having a shape in which the material constituting the adhesive layer 320NS and the material constituting the adhesive layer 330NS extend further to the outer peripheral side than the edges of the negative electrode layer and the separator layer and are connected to each other. Unlike the protruding portion 371 in FIG. 3, the protruding portion 375 has a hollow space 376 inside the protruding portion. Also in such a case wherein a hollow space is formed in the inside, as shown by an arrow o4 shown in FIG. 6, the maximum value in the thickness range including the hollow space is adopted as the maximum thickness o of the protruding portion in the formula (i).

The protruding portion may have a shape extending along the edge portion of the layered unit (U). From the viewpoint of improving the positioning accuracy of the layered unit (U), a cross section of the protruding portion preferably has the same shape at all the extending portions. However, the present invention is not limited to this configuration, and, for example, a part of the protruding portion extending along the edge portion may be thinner and another part thereof may be thicker. In this case, the thickness of the thickest part is adopted as the maximum thickness o of the protruding portion.

The protrusion length of the protruding portion may be appropriately adjusted in a range of, for example, 50 $\mu$m or more and less than 1 mm. The protrusion length is defined by a distance from, among the edge of the negative electrode layer and the edge of the separator layer, one that extends to the outer peripheral side more to a tip of the protruding portion that extends to the outer peripheral side in the plane direction (in the examples in FIG. 3 to FIG. 6, it extends to the right side in the horizontal direction). When the protrusion length is equal to or greater than the above-mentioned lower limit, it becomes possible to achieve excellent impact absorption. When the protrusion length is equal to or less than the above-mentioned upper limit, it becomes possible to relatively increase the area of the constituent elements such as the positive electrode layer and the negative electrode layer, thereby improving the performance of the resulting secondary battery.

(2. Secondary battery: other structures)

The lithium-ion secondary battery of the present invention includes a plurality of the layered units (U) described above. Specifically, a layered structure in which the layered units (U) are stacked in a state of being aligned with reference to the edge portion having the protruding portion to obtain a stacked product and bonded to each other may be included as a structured product inside the battery. The lithium-ion secondary battery of the present invention may further include any optional constituent element. Specifically, the lithium-ion secondary battery may include constituent elements such as a battery terminal connected to the electrode terminal of each layer of the layered structure, a casing for housing the layered structure and other constituent elements, and an electrolytic solution filled in the space inside the casing.

(3. Production method of secondary battery)

The lithium-ion secondary battery of the present invention may be produced by a production method including the following steps (1) and (2). Such a production method will be described below as the production method of the present invention.

Step (1): a step of preparing a layered unit (pU) having a plurality of edge portions, including a positive electrode layer, a separator layer and a negative electrode layer, and an adhesive layer (pNS) interposed between the negative electrode layer and the separator layer to bond them together.

Step (2): a step of applying pressure to one or more edge portions of the layered unit (pU) to protrude a part of the adhesive layer (pNS) to the outer peripheral side of the negative electrode layer, thereby forming a protruding portion to obtain the layered unit (U).

The step (1) preferably includes the following steps (1-1) and (1-2).

Step (1-1): a step of preparing a long-length layered unit primary sheet including a long-length positive electrode layer, a long-length separator layer and a long-length negative electrode layer, and an adhesive layer (pNS) interposed between the long-length negative electrode layer and the long-length separator layer.

Step (1-2): a step of cutting the layered unit primary sheet to obtain the layered unit (pU).

The production method of the present invention preferably further includes the following steps (3) and (4) in addition to the steps (1) and (2).

Step (3): a step of stacking a plurality of the layered units (U) in a state of being aligned with reference to the edge portion having the protruding portion to obtain a stacked product.

Step (4): a step of bonding the layered units (U) to each other in the stacked product.

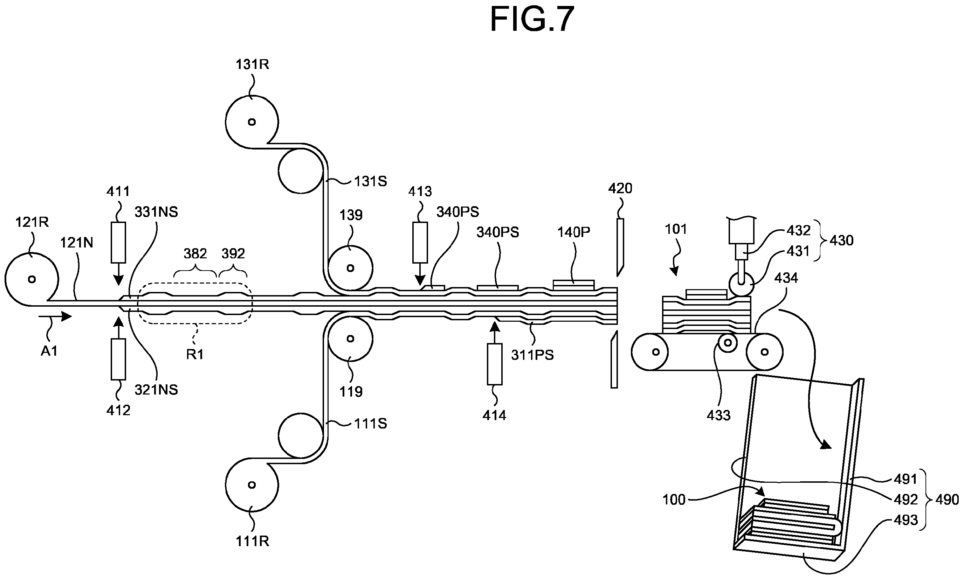

An example of the production method of the present invention will be described with reference to FIG. 7. FIG. 7 is a side view schematically illustrating an example of the production method of the present invention. FIG. 7 shows an example of the step (1) (including the step (1-1) and the step (1-2)), the step (2), and the step (3) among the steps described above.

(4. Step (1-1))

In FIG. 7, a long-length negative electrode layer 121N is unwound from a long-length negative electrode layer roll 121R and transported in a direction of an arrow A1. Subsequently, upper and lower surfaces of the long-length layer negative electrode layer are coated with an adhesive for constituting an adhesive layer using coating devices 411 and 412. By this coating, adhesive layers 331NS and 321NS are formed as the adhesive layers (pNS) on the upper and lower surfaces of the long-length layer negative electrode layer.

As the coating devices 411 and 412 and other coating devices used in the subsequent steps, a known coating device such as an inkjet device, a spray device, a dispenser, a gravure coating device, or a screen printing device may be used. In particular, from the viewpoint of being able to easily adjust the application amount of the adhesive material and application area, an inkjet coating device may preferably be used. Using the inkjet coating device makes it possible to change the basis weight of the adhesive to a desired value. As a result, it becomes possible to continuously form the adhesive layer having a region 392 with a high basis weight of the adhesive and a region 382 with a low basis weight of the adhesive. The term "basis weight" described herein refers to the weight of the coating material per unit area to be coated.

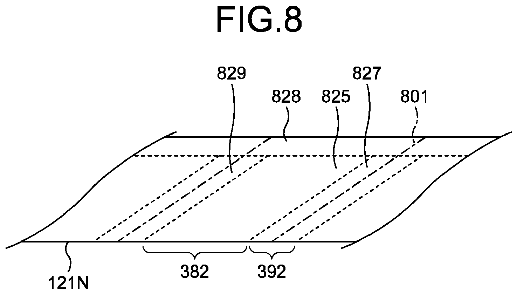

FIG. 8 is a perspective view more specifically illustrating the long-length negative electrode layer 121N in a region surrounded by a dashed line R1 in FIG. 7. In FIG. 8, lines 801 are lines extending in a direction parallel to the width direction of the long-length negative electrode layer 121N, which indicate a position where the long-length negative electrode layer 121N is to be cut in the subsequent step. As shown in FIG. 8, the surface of the long-length negative electrode layer 121N is provided with the region 382 with the low basis weight and the regions 392 with the high basis weight. The regions 392 include regions 827 and 829, and these regions extend along the lines 801 in a strip-like shape. The surface of the long-length negative electrode layer 121N is further provided, at an end portion thereof in the width direction, with a region 828 with the high basis weight having a strip-like shape extending along the lengthwise direction. The regions 827, 828 and 829 correspond to three of the four edge portions of the rectangular layered unit (U) to be produced. In FIG. 8, the region 382 with the low basis weight is indicated by a rectangular region 825 surrounded on three edges by the regions 827, 828 and 829.

In FIG. 7 and other drawings, for convenience of illustration, the adhesive layer (pNS) and other adhesive layers are schematically shown as a layered structure provided on the entire surface of the object to be coated, and their basis weight is indicated by the thickness of the layered structure. However, the adhesive layer is not limited to have such a structure and may be formed in various shapes. For example, the adhesive layer may be provided on the surface of the coated object in a shape of stripes, dots, lattice pattern, or the like. Particularly preferably, the adhesive layer may be provided on the surface of the coated object in a shape formed by a large number of dots. In this case, the adhesive layer is a layer in which the dots are scattered on the surface of the coated object. When such a dot-shaped adhesive layer is formed as the adhesive layer (pNS), liquid pouring property of the secondary battery is improved. That is, on the surfaces of the positive electrode layer and the negative electrode layer, bonded regions and not-bonded regions by the adhesive layer to other layers are thereby formed. As a result, in the secondary battery, permeation of the electrolytic solution between the positive electrode layer and the negative electrode layer can be further facilitated, and thereby the performance of the secondary battery can be further improved. When the adhesive layer (pNS) is formed in the dot shape, the basis weight thereof may be adjusted by the size of each dot and the dot density. For example, the adhesive layer (pNS) may be formed so that the dot density is set to be low in the above-mentioned region 382 with the low basis weight and the dot density is set to be high in the above-mentioned region 392 with the high basis weight, to thereby form a region with the low basis weight and a region with the high basis weight as desired. From the viewpoint of easiness of the control of the shape of the adhesive layer, it is particularly preferable to form such a dot-shaped adhesive layer by an inkjet coating method.

The layered product of the long-length negative electrode layer 121N and other layers is further transported, and the long-length separator layers are bonded to the upper and lower surfaces of the layered product. Specifically, a long-length separator layer 111S unrolled from a separator layer roll 111R is bonded to the lower surface of the lower adhesive layer 321NS on the lower side, while a long-length separator layer 131S unrolled from a separator layer roll 131R is bonded to the upper surface of the adhesive layer 331NS on the upper side. Such bonding is performed by pressing them with a pair of nip rolls 119 and 139.

By appropriately adjusting the pressure to be applied, the bonding can be achieved while maintaining the state of existence of the difference in the amount of the adhesive between the region with the high basis weight and the region with the low basis weight.

The long-length layered product is further transported, and the adhesive constituting the adhesive layer is applied onto the upper surface of the layered product by using a coating device 413. By this coating, an adhesive layer 340PS is formed on the upper surface of the long-length separator layer 131S. The positive electrode layer 140P that has been formed into a sheet piece shape in advance is further bonded to the upper surface of the adhesive layer 340PS. The positive electrode layer 140P is bonded so as to be positioned in a region between the adjacent lines 801 (FIG. 8). On the other hand, an adhesive layer 311PS is formed on the lower surface of the layered product by using a coating device 414. The material which may be adopted for constituting the adhesive layer 311PS may be a material in which an adhesive function is not exhibited when the layer is formed upon coating and the adhesive function is exhibited only after applying pressure, heat, or both of these treatments to the layer. Using such a material can facilitate the subsequent transport by a conveyor 434. These steps achieve the preparation of the long-length layered unit primary sheet (step (1-1)).

At any stage in the step (1-1), an optional step such as providing a negative electrode terminal and a positive electrode terminal may be performed. The provision of the negative electrode terminal may be performed, for example, prior to the formation of the adhesive layers 331NS and 321NS. The provision of the positive electrode terminal may be performed, for example, prior to the bonding of the positive electrode layer 140P. Examples of a specific method of providing the negative electrode terminal and the positive electrode terminal may include a method of attaching any member capable of functioning as a terminal to the negative electrode layer and the positive electrode layer and a method of cutting the edge portions of the negative electrode layer and the positive electrode layer into a desired shape.

(5. Step (1-2))

Subsequently, the long-length layered unit primary sheet is cut by a cutter 420 along the lines 801 shown in FIG. 8. This achieves the preparation of the layered unit (pU) 101 (step (1-2)).

(6. Step (2))

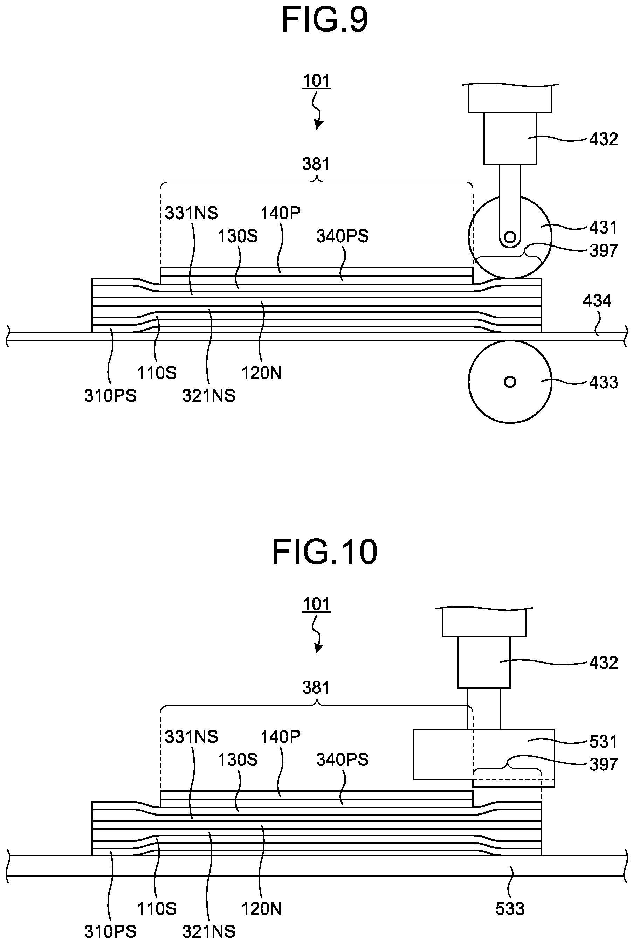

The obtained layered unit (pU) 101 is transported by the conveyor 434 and subjected to pressing by a pressing device 430. FIG. 9 is a side view more specifically illustrating an operation in the pressing step shown in FIG. 7. FIG. 9 shows a state in which only one edge portion of the layered unit (pU) is pressed. However, the present invention is not limited to this configuration, and other edge portions may be pressed if needed.

As shown in FIG. 9, the layered unit (pU) 101 includes, in this order, the adhesive layer 310PS, the separator layer 110S, the negative electrode layer 120N, the separator layer 130S, the adhesive layer 340PS, and the positive electrode layer 140P, which are formed by cutting the long-length layered product, and also includes the unpressed adhesive layer 321NS between the separator layer 110S and the negative electrode layer 120N and the unpressed adhesive layer 331NS between the negative electrode layer 120N and the separator layer 130S.

The layered unit (pU) 101 transported by the conveyor 434 is subjected to press contact with a roller 431 of the pressing device 430 at a desired pressure to achieve the pressing step. During the pressing, the layered unit (pU) 101 is supported by a support roll 433 disposed on the lower side of the conveyor 434 to achieve the effective pressing. Furthermore, by appropriately operating a cylinder 432 capable of controlling the applied pressure, the pressure applied from the roller 431 to the layered unit (pU) 101 can be adjusted to a desired pressure. The rollers 431 may be a plurality of rollers aligned in the width direction. Furthermore, the cylinders 432 for applying the pressure to these rollers may be provided independently to each of the plurality of rollers. Adopting such a configuration makes it possible to apply the pressure only to a desired region. For example, a region corresponding to the region 828 shown in FIG. 8 is continuously pressed, while the regions corresponding to the regions 827 and 829 are pressed only when these regions come directly under the rollers. As a result, the pressing can be performed only in the regions corresponding to the regions 827 to 829.

Appropriate pressing conditions differ depending on the material of the adhesive in use and the like. However, for example, when the pressing is performed by the roller shown in FIG. 9, the pressure may be in a range from 1 kN/m to 30 kN/m. Furthermore, during the pressing, heating the layered unit (pU) including the adhesive layer makes it easy to achieve deformation of the adhesive layer. The heating condition may be in a range, for example, from normal temperature to 150°C.

By applying the pressure in this manner, the adhesive layers 321NS and 331NS in the region (X) 397 are deformed and reduced in thickness, and, at the same time, the adhesive leaks out to the outer periphery of the negative electrode layer. By setting the degree of such leakage to an appropriate level, the protruding portion having a shape exemplified by the protruding portion 371 shown in FIG. 3 and other protruding portions shown in FIG. 4 to FIG. 6 is formed. The degree of the leakage may be adjusted by adjusting the basis weight in the region (X) in the step of forming the adhesive layer (pNS) and by adjusting the pressure in the pressing step. As a result of forming the protruding portion, the preparation of the layered unit (U) having the protruding portion (step (2)) is achieved.

Due to the leakage of the adhesive caused by performing the pressing step, the areal density (the weight of the material constituting the layer per unit area) of the adhesive layer (NS) in the pressed region is reduced. Thus, a difference between the areal density in the region with the high basis weight after the pressing and the area density in the region with the low basis weight after the pressing becomes smaller than that before the pressing. However, the areal density in these regions after the pressing does not need to be equal and may be different from the viewpoint of exhibiting the performance of the secondary battery. For example, the areal density on the bonding surface between the negative electrode layer and the separator layer may be adjusted so that the areal density of the adhesive layer (NS) in the region (X) (the regions 396 to 399 in the example in FIG. 1) protruding further to the outer peripheral side than the positive electrode layer is greater than the areal density of the adhesive layer (NS) in the region (I) (the region 381 in the example in FIG. 1) inside the region (X). The region (X), which is a region where the positive electrode layer and the negative electrode layer do not face each other in the secondary battery, contributes to preventing a short circuit in the secondary battery but does not significantly contribute to exhibiting the performance of the secondary battery. Thus, by having a configuration in which the areal density of the adhesive layer (NS) in the region (X) is adjusted to be relatively higher and the areal density of the adhesive layer (NS) in the region (I) is adjusted to be relatively lower, it becomes possible to prevent peeling between the layers. In addition, when the areal density of the adhesive layer (NS) in the regions (X) and (I) has such a relationship, it facilitates the permeation of the electrolytic solution in the part where the positive electrode layer and the negative electrode layer face each other in the secondary battery, making it possible to further improve the performance of the secondary battery. However, the present invention is not limited to this configuration, and the region of the adhesive layer (pNS) with the high basis weight and the region of the adhesive layer (NS) with the high areal density do not have to coincide with the region (X) where the negative electrode layer protrudes further to the outer peripheral side than the positive electrode layer. For example, the region of the adhesive layer (pNS) with the high basis weight and the region of the adhesive layer (NS) with the high areal density may be narrower or wider than the region (X).

(7. Step (3))

After obtaining the plurality of layered units (U) in the step (2), stacking thereof is performed while they are kept in a state of being aligned to form a stacked product (step (3)). The alignment of the layered units (U) may be performed with reference to the edge portion having the protruding portion.

In the example in FIG. 7, the layered unit (U) 100 is stacked inside a tray 490. The tray 490 includes a side plate 491 on the right side in the drawing, a side plate 492 on the far side, and a bottom plate 493. The tray 490 is used in a state in which the side plates are inclined from the vertical direction. Specifically, the tray 490 is used in a state in which the side plate 491 is inclined to the right side and the side plate 492 is inclined to the far side. The layered unit (U) 100 prepared in the step (2) is transported by the conveyor 434, thrown out from the end of the conveyor 434, and thrown into the tray 490. The thrown-in layered unit (U) 100 is placed on the bottom plate 493 or another layered unit (U) 100 already placed thereon, and stacked inside the tray 490 in a state in which the edge portion on the right side in the drawing abuts on the side plate 491 and the edge portion on the far side abuts on the side plate 492. When the edge portions in the two orthogonal directions abut on the side plates in this manner, a plurality of the layered units (U) are stacked while they are kept in a state of being positionally aligned on the same plane with reference to these edge portions.

When the layered unit (U) 100 is thrown out from the end of the conveyor 434, the layered unit (U) 100 is provided with momentum by which abutting of the layered unit (U) 100 to the side plates 491 and 492 is achieved. Thus, impact is applied to the edge portions of the layered unit (U) 100 when the layered unit (U) 100 is thrown into the tray 490. In general, when such impact is applied, a problem such as bending or breakage of the end portion of the negative electrode layer or the separator layer constituting the layered unit may occur. Particularly when the layered units are continuously produced at a high speed, the momentum provided at the time of throwing out becomes greater, and, as a result, the impact applied to the edge portions of the layered unit upon abutting becomes particularly stronger, which further increases the possibility of causing the problem.

Regarding this, in the production method of the present invention, the layered unit (U) having the specific protruding portions can reduce such impact using the protruding portions. Specifically, the manner of the preparation and stacking of the layered unit (U) are set such that the edge portions that abut on the side plates at the time of throwing in have the protruding portions, so that it becomes possible to effectively reduce such impact.

Specifically, the protruding portions may be provided to the edge portion having the region (X) 397, which is the edge portion located on the downstream side (that is, the right side in the drawing) in the transporting direction of the transporting path shown in FIG. 7 and the edge portion having the region (X) 398 (see FIG. 1), which is one of the edge portions perpendicular to the edge portion having the region (X) 397. By providing such protruding portions, it becomes possible to effectively reduce the impact when these edge portions abut on the side plates 491 and 492 of the tray 490.

When the layered unit (U) abuts on the tray, the protruding portions may be deformed by the impact. In general, the thickness of the protruding portions tends to increase by the abutting on the tray. Thus, in order for the maximum thickness o of the protruding portion in the secondary battery to satisfy the above-mentioned formula (i), the maximum thickness o of the protruding portion in the layered unit (U) before being thrown into the tray is preferably smaller than the upper limit of the above-mentioned formula (i). Specifically, o before throwing out is preferably u/2 or less.

When the layered unit (U) includes an electrode terminal, from the viewpoint of preventing a damage to the electrode terminal, it is preferable that the electrode terminal is provided to the edge portion other than the edge portion having the protruding portion that abuts on the tray. In the example in FIG. 7, the electrode terminal is preferably provided to the edge portion, for example, on the front side in the drawing.

(8. Step (4) and subsequent steps)

By bonding the layered units (U) to each other in the stacked product thus obtained, a layered structure in which the plurality of layered units (U) are bonded to each other is obtained (step (4)). Such bonding may be performed by applying a treatment such as a heat treatment, a pressure treatment, or a combination thereof to the stacked product stored in the tray while the relative positional relationship between the plurality of layered units (U) are maintained. The bonding conditions may be appropriately adjusted according to the properties of the adhesive layer (the adhesive layer 310PS in the examples in FIG. 1 to FIG. 7) present on the surface with which the plurality of layered units (U) is in contact.

A secondary battery may be produced using the layered structure obtained in the step (4). Specifically, the secondary battery in which the layered structure is housed may be obtained through steps of connecting a terminal of each layer in the layered structure, housing the layered structure in a battery casing, injecting an electrolytic solution, sealing the casing, and the like.

(9. Modifications)

The secondary battery and the production method thereof of the present invention are not limited to the specific examples described above, and for example, various modifications may be made to the specific examples described above.

For example, in the examples shown in FIG. 7 and FIG. 9, in the step (2), the layered unit (pU) 101 is pressed by the pressing device 430 having the roller 431. However, the manner of pressure application is not limited to this configuration, and other devices may be used. For example, as shown in FIG. 10, instead of the roller 431, a pressing device having a flat pressing plate 531 may be used. The shape of the pressing plate 531 may be any shape suitable for the step (2). For example, as shown by the solid line in FIG. 10, in the pressing plate 531, a part corresponding to the edge portion 397 may have a thicker shape, so that application of higher pressure can be achieved at the edge portion. However, in actual products in many cases, the thickness of the adhesive layer 340PS and the positive electrode layer 140P is small enough to be ignored during the pressing. In such a case, the pressing plate 531 may have a flat shape indicated by the dashed line in FIG. 10. When the pressure is applied using a pressing plate such as the pressing plate 531, the layered unit (pU) is placed on a support plate 533 having an appropriate strength, thereby making it possible to apply the pressure while preventing warping of the layered unit (pU).

In the example shown in FIG. 7, the layered unit (U) is stacked in the tray with the two side plates 491 and 492 such that two of the four edge portions of the layered unit (U) having an approximately rectangular shape abut on the tray. However, the manner of the stacking of the layered unit (U) is not limited to this configuration, and stacking may be performed using other devices. For example, the layered unit (U) may be stacked using a tray or magazine having side plates which are in contact with three or four of the four edge portions of the layered unit (U).

(10. Description of Materials)

Materials constituting the layered unit (U) in the lithium ion secondary battery of the present invention will be described below.

(10.1. Materials of electrode layer (negative electrode layer and positive electrode layer))

The electrode layer (negative electrode layer or positive electrode layer) may be a composite layer including a current collector layer and an electrode mixture layer (positive electrode mixture layer or negative electrode mixture layer) provided on one surface or both surfaces thereof. The electrode layer may also be a thin film of metal that can function as an electrode layer. The electrode layer may also include a porous membrane layer in addition to the layer described above.

When the electrode layer includes a current collector, an electrode mixture layer, and a porous membrane layer, known materials may be appropriately selected as the materials constituting these layers. For example, those described in Japanese Patent Application Laid-Open No. 2013-145763 A may be used.

(10.2. Materials of separator layer)

The separator layer may be a composite layer including a porous resin film and a porous membrane layer provided on one or both surfaces of the resin film. Known materials that can be used in the field of the secondary battery may be appropriately selected as the materials constituting these components. Examples of such materials include those described in Japanese Patent Application Laid-Open No. 2012-204303 A and Japanese Patent Application Laid-Open No. 2013-145763 A.

(10.3. Adhesive)

The adhesive constituting the adhesive layer may be appropriately selected from those having little inhibition of the battery reaction when provided between the negative electrode layer and the positive electrode layer. Specifically, materials known in the field of secondary batteries may be appropriately selected.

In general, the adhesive may be a material containing one or more sort of polymers. Examples of such polymers may include those described in Patent Literatures 1 and 2. More specific examples thereof may include a fluorine-based polymer such as polyvinylidene fluoride and a polyvinylidene fluoride-hexafluoropropylene (PVdF-HFP) copolymer; a conjugated diene-based polymer such as a styrene-butadiene copolymer (SBR) and an acrylonitrile-butadiene copolymer (NBR); a hydrogenated product of a conjugated diene-based polymer; a polymer containing a (meth)acrylic acid alkyl ester monomer unit (acrylic polymer); and a polyvinyl alcohol-based polymer such as polyvinyl alcohol (PVA).

In the present application, "(meth)acrylic acid" means acrylic acid and/or methacrylic acid.

The adhesive may be particles of a material including a polymer, may be a non-particulate material, or may be a combination thereof. When the adhesive includes such particles, the particles may be particles of a single phase structure formed from a single polymer, or particles of a different phase structure formed by physically or chemically bonding two or more polymers that are different from each other. Herein, specific examples of the different phase structure may include a core-shell structure in which spherical particles are formed from polymers wherein the polymer of central portions (core portions) and the polymer of outer sheath portions (shell portions) are different; and a side-by-side structure in which two or more polymers are juxtaposed. In the present application, the "core-shell structure" includes not only a structure in which the shell portion completely covers the outer surface of the core portion but also a structure in which the shell portion partially covers the outer surface of the core portion. In the present application, even when the outer surface of the core portion appears to be completely covered by the shell portion in appearance, if a hole communicating the inside and outside of the shell portion is formed, the shell portion is considered as a shell portion partially covering the outer surface of the core portion. Specific examples of the adhesive particles having such a core-shell structure may include those described in Patent Literature 2.

The adhesive material may be supplied to the bonding surface in an optional state, such as a solid state, a molten state, a state of being dissolved in a solvent, or a state of being dispersed in a solvent. Among these, it is preferable that the adhesive material is supplied in a state of being dissolved in a solvent or in a state of being dispersed in a solvent, and more preferably supplied in a state of being dispersed in a solvent.

When the adhesive is supplied to the bonding surface in a state of being dissolved in a solvent or in a state of being dispersed in a solvent, that is, when the adhesive composition containing the adhesive material and the solvent is supplied to the bonding surface, the solvent for the adhesive composition is not particularly limited, and for example, water, an organic solvent, and a mixture thereof may be used. Examples of the organic solvent may include, but are not limited to, cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone and ε-caprolactone; nitriles such as acetonitrile and propionitrile; ethers such as tetrahydrofuran and ethylene glycol diethyl ether; and alcohols such as methanol, ethanol, isopropanol, ethylene glycol and ethylene glycol monomethyl ether. From the viewpoint of production efficiency, water and alcohol are preferable as the solvent, and water is more preferable.

Such an adhesive in the form of a solution or dispersion may be particularly suitably applied to coating by an inkjet coating method.

Reference Sign List

    100: layered unit (U)
    101: layered unit (pU)
    110D: lower surface of separator layer 110S
    110S: separator layer
    110U: upper surface of separator layer 110S
    111R: roll of separator layer
    111S: long-length separator layer
    119: nip roll
    120D: lower surface of negative electrode layer 120N
    120N: negative electrode layer
    120T: negative electrode terminal
    120U: upper surface of negative electrode layer 120N
    121N: long-length negative electrode layer
    121R: roll of long-length negative electrode layer
    130D: lower surface of separator layer 130S
    130S: separator layer
    130U: upper surface of separator layer 130S
    131R: roll of separator layer
    131S: long-length separator layer
    139: nip roll
    140D: lower surface of positive electrode layer 140P
    140P: positive electrode layer
    140T: positive electrode terminal
    140U: upper surface of positive electrode layer 140P
    310PS: adhesive layer
    311PS: adhesive layer
    320NS: adhesive layer
    321NS: adhesive layer

330NS: adhesive layer
331NS: adhesive layer
340PS: adhesive layer
371: protruding portion
372: protruding portion
373: protruding portion
374: protruding portion
375: protruding portion
382: region with low basis weight adhesive
392: region with high basis weight adhesive
396: region (X) where the negative electrode layer protrudes further to the outer peripheral side than the positive electrode layer
397: region (X) where the negative electrode layer protrudes further to the outer peripheral side than the positive electrode layer
398: region (X) where the negative electrode layer protrudes further to the outer peripheral side than the positive electrode layer
399: region (X) where the negative electrode layer protrudes further to the outer peripheral side than the positive electrode layer
411: coating device
412: coating device
413: coating device
414: coating device
420: cutter
430: pressing device
431: roller
432: cylinder
433: support roll
434: conveyor
490: tray
491: side plate
492: side plate
493: bottom plate
531: pressing plate
533: support plate
801: line
825: region with low basis weight
827: region with high basis weight
828: region with high basis weight
829: region with high basis weight
o1: maximum thickness of protruding portion 371
o2: maximum thickness of protruding portion 372 and 373
o3: maximum thickness of protruding portion 374
o4: maximum thickness of protruding portion 375
r1: thickness of negative electrode layer 120N
u1: thickness of entire layered unit (U)100

**Claims**

1. A lithium-ion secondary battery comprising a plurality of layered units (U), wherein:

   the layered unit (U) is a unit including a positive electrode layer, a separator layer and a negative electrode layer, and an adhesive layer (NS) interposed between the negative electrode layer and the separator layer to bond them together, the unit having a plurality of edge portions; and the adhesive layer (NS) has a protruding portion protruding to an outer peripheral side of the negative electrode layer at one or more of the edge portions.

2. The lithium-ion secondary battery according to claim 1, wherein, at the edge portion having the protruding portion,

   the negative electrode layer extends further to the outer peripheral side than the positive electrode layer, and
   the separator layer has an edge aligned with an edge of the negative electrode layer or extending further to the outer peripheral side than the negative electrode layer.

3. The lithium-ion secondary battery according to claim 1 or 2, wherein

   the layered unit (U) satisfies the following formula (i) :

   $$r/2 < o \leq u \quad \text{Formula (i)}$$

   (in the formula, o represents a maximum thickness of the protruding portion,
   r represents a thickness of the negative electrode layer, and
   u represents a thickness of the layered unit (U)).

4. The lithium-ion secondary battery according to any one of claims 1 to 3, wherein the separator layer has an edge aligned with an edge of the negative electrode layer at one or more of the edge portions.

5. The lithium-ion secondary battery according to any one of claims 1 to 4, wherein the adhesive layer (NS) includes a resin filler having a core-shell structure.

6. The lithium-ion secondary battery according to any one of claims 1 to 5, wherein an areal density of the adhesive layer (NS) in a region (X) protruding further to the outer peripheral side than the positive electrode layer on a bonding surface between the negative electrode layer and the separator layer is greater than an areal density of the adhesive layer (NS) in a region (I) inside the region (X).

7. The lithium-ion secondary battery according to any one of claims 1 to 6, further comprising an adhesive layer (PS) interposed between the positive electrode layer and the separator layer to bond them together.

8. A production method of the lithium-ion secondary battery according to any one of claims 1 to 7, comprising:

a step (1) of preparing a layered unit (pU) having a plurality of edge portions, including the positive electrode layer, the separator layer and the negative electrode layer, and an adhesive layer (pNS) interposed between the negative electrode layer and the separator layer to bond them together; and
a step (2) of applying pressure to one or more edge portions of the layered unit (pU) to protrude a part of the adhesive layer (pNS) to the outer peripheral side of the negative electrode layer, thereby forming a protruding portion to obtain the layered unit (U).

9. The production method according to claim 8, wherein the step (1) includes forming the adhesive layer (pNS) in a dot shape by an inkjet coating method.

10. The production method according to claim 8 or 9, wherein at the edge portions of the layered unit (pU) to be pressed, a weight basis of the adhesive layer (pNS) in a region (X) protruding further to the outer peripheral side than the positive electrode layer is greater than a weight basis of the adhesive layer (pNS) in a region (I) inside the region (X).

11. The production method according to any one of claims 8 to 10, wherein
the step (1) includes:

a step (1-1) of preparing a long-length layered unit primary sheet including a long-length positive electrode layer, a long-length separator layer and a long-length negative electrode layer, and an adhesive layer (pNS) interposed between the long-length negative electrode layer and the long-length separator layer; and
a step (1-2) of cutting the layered unit primary sheet to obtain the layered unit (pU).

12. The production method according to any one of claims 8 to 11, further comprising:

a step (3) of stacking a plurality of the layered units (U) while they are kept in a state of being aligned with reference to the edge portion having the protruding portion to obtain a stacked product; and
a step (4) of bonding the layered units (U) to each other in the stacked product.

# FIG.1

100

399    398    381    397

396

140P
130S
120N
110S

120T    140T

# FIG.2

# FIG.3

100

381　　　　　　　　　　397

140P　340PS　　130S　330NS

371

o1　u1

110S　120N　　r1　320NS　310PS

# FIG.4

100

381　　　　　　　　　　397

140P　340PS　　130S　330NS

372

o2　u1

373

110S　120N　　r1　320NS　310PS

# FIG.5

# FIG.6

FIG.7

# FIG.8

# FIG.9

# FIG.10

## INTERNATIONAL SEARCH REPORT

| International application No. |
| --- |
| **PCT/JP2021/018429** |

### A.    CLASSIFICATION OF SUBJECT MATTER

*H01M 4/13*(2010.01)i; *H01M 4/139*(2010.01)i; *H01M 10/0585*(2010.01)i
FI:   H01M4/13; H01M10/0585; H01M4/139

According to International Patent Classification (IPC) or to both national classification and IPC

### B.    FIELDS SEARCHED

Minimum documentation searched (classification system followed by classification symbols)

H01M4/13; H01M4/139; H01M10/0585

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
| --- | --- | --- |
| X | JP 2019-053862 A (GS YUASA CORP.) 04 April 2019 (2019-04-04)<br>    claim 1, fig. 2, 4, 5 | 1, 2, 7 |
| Y | | 5 |
| A | | 3, 4, 6, 8-12 |
| Y | WO 2020/045246 A1 (ZEON CORP.) 05 March 2020 (2020-03-05)<br>    paragraph [0021] | 5 |
| A | JP 2019-125441 A (TOYOTA MOTOR CORP.) 25 July 2019 (2019-07-25)<br>    claims, paragraph [0026] | 8-12 |

☐ Further documents are listed in the continuation of Box C.    ☑ See patent family annex.

| *    Special categories of cited documents: | |
| --- | --- |
| "A"   document defining the general state of the art which is not considered to be of particular relevance | "T"   later document published after the international filing date or priority date and not in conflict with the application but cited to understand the principle or theory underlying the invention |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **21 June 2021** | **06 July 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/018429**

| Patent document cited in search report | | | Publication date (day/month/year) | Patent family member(s) | Publication date (day/month/year) |
|---|---|---|---|---|---|
| JP | 2019-053862 | A | 04 April 2019 | (Family: none) | |
| WO | 2020/045246 | A1 | 05 March 2020 | (Family: none) | |
| JP | 2019-125441 | A | 25 July 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020054801 A
- WO 2020067208 A
- JP 2013145763 A
- JP 2012204303 A